# FASCICULE DE BREVET EUROPEEN

(11) **EP 0 431 993 B1**
(45) Date de publication et mention de la délivrance du brevet: **06.10.1993**
(21) Numéro de dépôt: 90403102.8
(22) Date de dépôt: 02.11.1990
(51) Int. Cl.: C02F 3/04, C02F 3/10

(54) **Installation de traitement complémentaire des eaux domestiques usées**
Anlage für die ergänzende Behandlung von häuslichem Abwasser
Installation for complementary treatment of sewage

(30) Priorité: 03.11.1989 FR 8914735
(43) Date de publication de la demande: 12.06.1991
(73) Titulaire: SARL TAUREAU, F-34980 MONTFERRIER SUR LEZ (FR)
(72) Inventeur: Joseph, Christian, F-34000 Montpellier (FR); Soulie, Michel, F-34270 Valflaunes (FR)
(74) Mandataire: Ravina, Bernard

(56) Documents cités:
- DE-A- 2 310 652
- DE-A- 3 716 637
- DE-C- 224 241
- GB-C- 521 676
- "Lehr- und Handbuch der Abwassertechnik", vol. 4, 1986, pages 147-148, Ernst & Sohn, Berlin, DE; Paragraphe: "Tropfkörperfüllstoffe", paragraphe 2.5.2.7.1: "Brockenfüllungen. Einfluss von Korngrösse und Beschaffenheit"
- CHEMICAL ABSTRACTS, vol. 72, no. 16, 20 avril 1970, page 292, abrégé no. 82718p, Columbus, Ohio, US; L. CERVENKA et al.: "Application of expanded perlite for waste water clarification"

## Description

La présente invention concerne une installation de traitement des eaux domestiques usées déjà prétraitées et clarifiées.

Le prétraitement peut être effectué par des boues activées à recyclage ou équivalent.

La clarification consiste à faire décanter et/ou faire flotter, éventuellement à l'aide d'un floculant, les matières contenues dans les eaux et susceptibles d'être ainsi éliminées.

Les eaux ainsi prétraitées et clarifiées contiennent encore une concentration élevée en germes témoins de contamination fécale, en matières en suspension (MES) et en corps oxydable traduite par une forte demande chimique en oxygène (DCO).

La réintégration de ces eaux prétraitées dans les milieux naturels peut causer des problèmes de pollution, notamment si ces milieux naturels récepteurs sont fragiles comme par exemple une zone de baignade, une zone à proximité d'habitats, un cours d'eau ou autres.

Une épuration d'eau efficace est donc nécessaire lorsqu'un risque de contamination existe ou lorsque la réutilisation des eaux traitées est demandée.

L'infiltration des eaux prétraitées dans le sol est un usage connu suivant lequel les eaux à traiter sont répandues sur le sol en place ou sur des matériaux rapportés constituant un massif filtrant.

L'usage d'enceintes (telles des colonnes) d'infiltration à massif filtrant en sable est également connu.
Ce massif filtrant en sable peut être constitué d'une seule couche d'une granulométrie donnée ou de plusieurs couches de granulométries différentes.

L'infiltration prédécrite peut être valable si :
- la quantité d'air rencontrée, pendant le passage dans le massif filtrant, par les eaux à traiter est suffisante pour effectuer l'oxydation des produits d'azotes oxydables et des matières organiques dégradables contenus dans ces eaux,
- la vitesse de passage de l'eau à travers le massif filtrant est suffisamment lente, autrement dit, le temps de passage est suffisamment long.

Les pores du sable, habituellement utilisés dans ce domaine, représentent de 15 à 30 % du volume du dit sable, ceci rend ces pores rapidement occupées ou quasi-occupées par les eaux à traiter et diminue par conséquent l'espace disponible pour l'air nécessaire pour effectuer les différentes oxydations.

L'usage d'un massif filtrant composé de plusieurs couches fait varier uniquement les surfaces volumiques des particules et non pas le vide interstitiel : pour un volume donné de sable, la somme des surfaces de particules augmente lorsque la taille de ces particules diminue mais le rapport entre le vide interstitiel et le volume du sable reste constant.

Pour obtenir un traitement efficace des eaux usées par l'infiltration à travers du sable, il est nécessaire que les quantités d'eaux traitées soient faibles par rapport à la surface d'épandage disponible.
Ces quantités d'eaux sont de l'ordre d'une dizaine de centimètres par jour comme c'est la pratique dans certaines régions des Etats-Unis d'Amérique.

Les tentatives de traitement de quantités des eaux usées par infiltration à travers le sable (enceinte ou sol) dépassant quelques dizaines de centimètres ont conduit à produire des eaux traitées encore polluantes, ceci en ce qui concerne soit les germes pathogènes soit les produits oxydables d'azote notamment les sels d'amoniaque.

Un but de la présente invention est de proposer une installation de traitement des eaux usées déjà prétraitées et clarifiées produisant des eaux traitées presque exemptes de sel d'amoniaque et dont la teneur en germes pathogènes répond aux normes de baignade.

Un autre but de la présente invention est de proposer une installation d'épuration compacte et à haut rendement de traitement.

Les eaux traitées à l'aide de l'installation faisant l'objet de la présente invention peuvent être utilisées sans risque de pollution pour l'irrigation à proximité immédiate de l'habitat.

Un autre but de la présente invention est d'effectuer un traitement efficace des eaux usées tout en occupant une surface réduite.

La station de traitement des eaux usées selon l'invention fait partie de celles comportant :
a) une enceinte telle qu'une colonne, contenant un massif filtrant de particules non-dégradables biologiquement stables chimiquement et non-altérables physiquement, les eaux à traiter traversant par gravité le dit massif filtrant, l'enceinte étant constituée par des parois latérales et par un fond perméable par lequel les eaux traitées sont récupérées,
b) un moyen distributeur assurant l'arrivée des eaux à traiter à la dite enceinte,

Suivant l'invention, l'installation se caractérise essentiellement en ce que :
- le massif filtrant est composé des deux couches :
   a) une couche inférieure légère dont les particules ont une même nature et une granulométrie de 0,05 à 5 mm, une densité inférieure à 100 kg/m³, cette couche ayant un vide interstitiel représentant jusqu'à 85 % de son volume,
   b) une couche supérieure dense dont les particules ont une même nature et une granulométrie de 0,05 à 5 mm, une densité supérieure à 1000 kg/m³, cette couche ayant un vide interstitiel représentant jusqu'à 35 % de son volume,
- le moyen distributeur contrôle le débit d'arrivée des eaux prétraitées de telle sorte que ces eaux, traversant par gravité, dans l'ordre, la couche supérieure puis la couche inférieure, effectuent au moins la fin du passage dans la couche supérieure dans un milieu non saturé, c'est-à-dire, dans un milieu triphasique solide-liquide-gaz, et en ce que :
   - des moyens d'aération founissent latéralement l'air dans la couche légère inférieure.

Suivant une autre caractéristique de l'installation faisant l'objet de la présente invention, les moyens d'aération fournissant latéralement l'air dans la couche légère inférieure sont constitués par :
- des parois latérales perméables de l'enceinte et/ou,
- au moins une structure d'aération, telle qu'une conduite d'aération, s'étendant dans le massif filtrant et dont les parois sont perméables vis-à-vis de la dite couche inférieure, l'intérieur de cette (ces) structure(s) communique(nt) soit avec l'atmosphère soit avec une source d'air forcé.

Suivant une autre caractéristique de l'invention, les parois latérales ont une zone supérieure étanche vis-à-vis de laquelle se trouve au moins partiellement la couche supérieure dense et une zone perméable, située au dessous de la dite zone, supérieure vis-à-vis de laquelle se trouve au moins partiellement la couche inférieure légère.

Suivant une autre caractéristique, les parois latérales de l'enceinte sont constituées de trois zones :
- une zone supérieure étanche vis-à-vis de laquelle se trouve, au moins partiellement, la couche supérieure dense,
- une zone intermédiaire perméable vis-à-vis de laquelle se trouve patiellement la couche inférieure légère permettant ainsi la communication de l'air à la dite couche,
- une zone inférieure étanche.

Suivant encore une autre caractéristique, la matière des particules de la couche inférieure légère est une matière à dominante siliceuse.

Suivant encore une autre caractéristique la matière à dominante siliceuse est la perlite expansée.

Suivant encore une autre caractéristique, les particules de la couche dense supérieure sont en grains de sable.

D'autres caractéristiques et avantages seront compris à la lecture de la description détaillée ci-dessous accompagnée par des dessins dans lesquels :
- la figure 1 est un schéma représentant une forme de réalisation de l'installation selon l'invention dans laquelle l'enceinte a une forme cylindrique,
- la figure 2 est un schéma qui représente une deuxième forme de réalisation de l'installation dans laquelle l'enceinte a une forme de couronne à double paroi cylindrique coaxiale,
- la figure 3 montre une troisième forme de réalisation d'une installation selon l'invention,

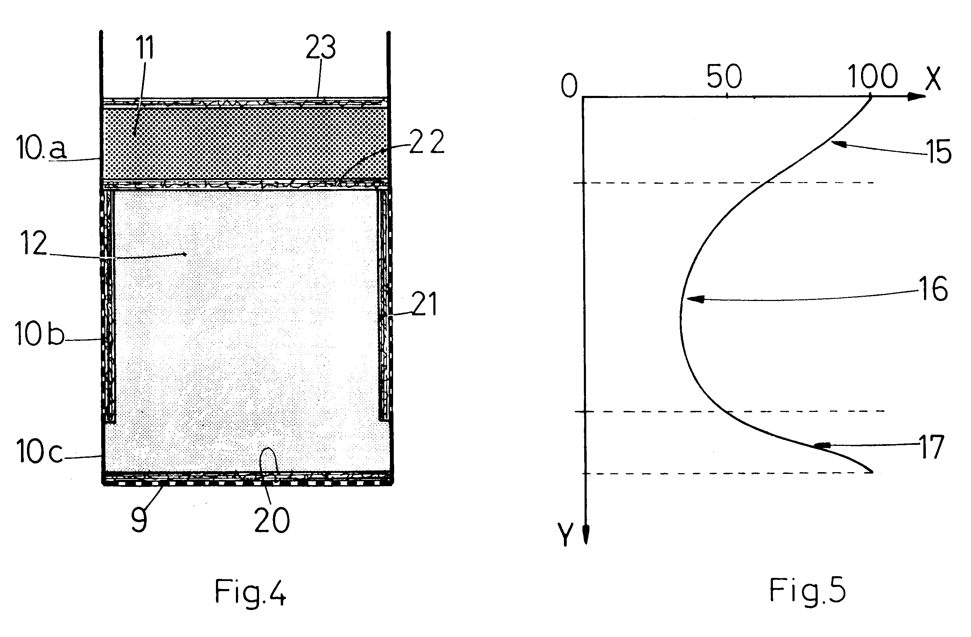

- la figure 4 est un schéma qui représente une enceinte,
- la figure 5 est une courbe qui décrit l'état de saturation suivant le passage des eaux à partir de leur introduction jusqu'à leur évacuation.

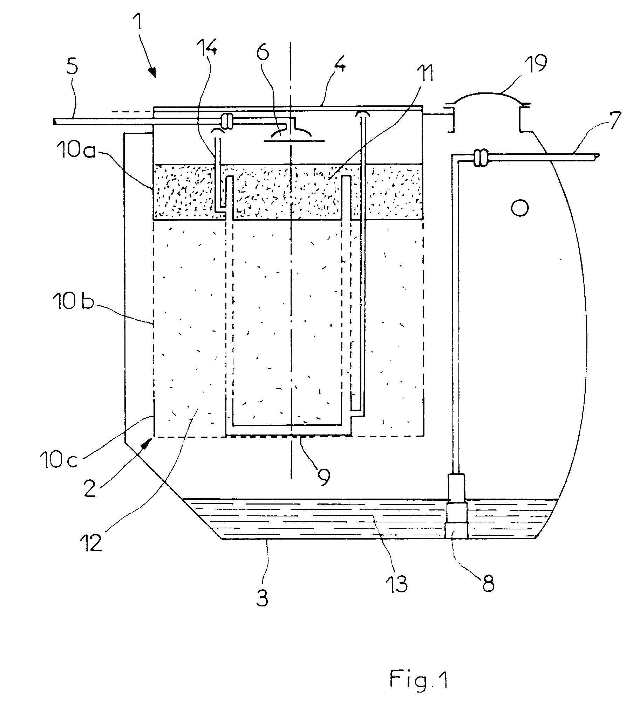

Sur la figure 1, l'installation de traitement (1) comporte une enceinte, telle que par exemple une colonne (2), fixée en suspension dans un contenant (3) dont la paroi supérieure (4) est perméable à l'air, une conduite d'alimentation (5) finissant par un éclateur de surface (6), une conduite d'évacuation (7) servie par une pompe immergée (8) située dans le fond du contenant (3) où les eaux traitées (13) sont accumulées. Le niveau de ces eaux traitées doit être toujours inférieur au fond de l'enceinte.

L'enceinte (2) a une forme cylindrique et est constituée par une paroi latérale cylindrique et par un fond perméable (9). La paroi latérale de l'enceinte a une zone supérieure étanche et une zone perméable, située au dessous de la dite zone étanche, cette zone perméable peut s'étendre jusqu'au niveau du fond de l'enceinte.

Pour des ordres pratiques, la paroi cylindrique est constituée de trois zones :
- une zone supérieure (10a) étanche,
- une zone intermédiaire (10b) perméable et,
- une zone (10c) étanche.

L'enceinte (2) est chargée par des particules constituant un massif filtrant.
Le massif filtrant est constitué de deux couches :
- une couche supérieure dense (11) et,
- une couche inférieure légère (12).

La couche légère occupe les espaces correspondant aux zones étanche (10c) et perméable (10b) et la couche dense se trouve dans l'espace correspondant à la zone étanche (10a).

Les deux couches supérieure et inférieure ont une granulométrie de 0,05 à 5mm.
Cette granulométrie est de préférence de 0,1 à 1 mm.
Chaque couche est constituée de particules chimiquement stables, biologiquement non-dégradables et physiquement non-altérables.

La densité de la couche supérieure est supérieure à 1000 kg/m³ et celle de la couche inférieure est inférieure à 100 kg/m³.

Le vide interstitiel de la couche supérieure est de 15 à 35 %, ceci en fonction de l'homogénéïté de la répartition de la taille des particules, le vide interstitiel pour une répartition granulométrique hétérométrique, c'est-à-dire, des particules de différentes tailles est inférieur à celui d'une répartition homométrique, c'est-à-dire, des particules ayant la même taille. En effet, dans le cas des particules denses tassées sphériques, c'est uniquement leur degré d'homogénéïté qui influence le vide interstitiel constituant les pores.

Dans le cas des particules constituant la couche inférieure légère, un autre facteur intervient pour déterminer le vide interstitiel, c'est la force d'interaction entre ces particules, cette force est négligeable dans le cas des particules denses, ceci car la force de gravité est beaucoup plus grande que celle d'interaction entre les particules.

Dans le cas de la couche inférieure comme dans le cas de la couche supérieure, les particules de chaque couche ont la même nature, c'est-à-dire, que la force d'interaction entre les particules est une force de répulsion.

Dans le cas des particules légères constituant la couche inférieure, cette force de répulsion empêche ces particules d'occuper l'espace de la même façon que dans le cas de particules denses, par conséquent, les pores entre ces particules légères sont plus importantes que celles entre les particules denses.
Le vide interstitiel constituant les pores peut atteindre 85 % du volume apparent des particules.
Le liant entre les particules est assuré par l'action des forces de tensions superficielles développées en milieu non-saturé par le film d'eau entourant toutes les particules.

La matière des particules des deux couches est une matière à dominante siliceuse, ceci garantit la neutralité chimique et biologique.

La couche supérieure est constituée de sable et la couche inférieure est constituée de perlite expansée.
La densité du sable (granulométrie 0,1 à 1 mm) est supérieure à 2500 kg/m³ et celle de la perlite expansée (granulométrie comparable à celle du sable) est approximativement de 65 kg/m³.

L'aération des particules de la perlite expansée est assurée par la zone intermédiaire perméable (10b) de la paroi latérale de l'enceinte.
Cette aération peut être également assurée par une structure d'aération (14) dont l'intérieur fournit l'air à la couche inférieure.
Cette structure d'aération, peut être constituée par une ou plusieurs conduites.

Il est à noter que l'aération de la dite couche inférieure peut être assurée soit par l'un de ces deux moyens d'aération latérale soit par les deux moyens à la fois.
La structure d'aération (14) peut être ouverte à l'air libre (comme montre le dessin) ou peut être reliée à une source d'air forcé.

Sur les figures (4) et (5) sont montrés le schéma d'une enceinte semblable à celle de la figure (1) et la courbe décrivant l'occupation des pores des deux couches par les eaux en traitement.
Sur la figure (5), l'axe (X) représente le pourcentage d'occupation des pores par les eaux à traiter ; le "O" veut dire, occupation nulle, c'est-à-dire, des particules à l'état sec et le "100" veut dire occupation totale, c'est-à-dire, à l'état de saturation, l'axe "Y" représente la profondeur du massif filtrant mesuré à partir de sa surface supérieure.

Le moyen distributeur dont la conduite d'alimentation et l'éclateur de surface font partie, assure l'arrivée des eaux prétraitées à partir d'une installation de prétraitement.

Les eaux sont arrivées en continu ou selon des lames séquentielles créant ainsi une zone saturée au commencement, d'où la nécessité que la partie supérieure de la paroi de l'enceinte soit étanche.

Dans les deux cas, la courbe d'occupation des pores par les eaux en traitement dans la couche supérieure doit obéir à la première partie (15) de la courbe de la figure (5), ceci est facilement trouvable soit par un calcul simple sachant la porosité du sable soit d'une façon empirique.

A titre d'exemple, pour une couche de sable dont la granulométrie est de 0,1 à 1 mm et dont la hauteur est de 12 cm, l'alimentation suivant une lame d'eau de 2 cm chaque heure (48 cm par jour) conduit à satisfaire à cette condition.
Dans le cas d'alimentation en continu, les mêmes quantités d'eau doivent être réparties sur le temps.
D'une manière générale, dans le cas d'alimentation par des lames d'eau, la valeur de chaque lame doit être inférieure à la hauteur équivalente de l'espace poral de cette couche dense supérieure.
La hauteur équivalente de l'espace poral est la hauteur d'un volume ayant la même valeur que celle de l'espace poral (le vide interstitiel) et la même forme que l'intérieur de l'enceinte.

Une fois que la condition de non-saturation est respectée à la fin du passage dans la couche supérieure, la suite de la courbe se reproduit spontanément ; dans la deuxième partie (16) de la courbe, les eaux occupant, par exemple, 60% des pores du sable, à la fin du passage dans la couche supérieure, se trouvant dans la couche inférieure en présence d'un vide interstitiel très important, ceci conduit à diminuer beaucoup l'occupation de ces pores, en premier temps, cette occupation se stabilise dans un régime stationnaire ou transitoire, à un taux inférieur à celui dans la couche de sable.

Le déplacement des eaux retenues dans une partie de l'espace poral est sous le contrôle de deux types de forces ; les forces gravifiques et les forces de succions générées par l'action des forces de tensions superficielles dans un milieu non saturé.

Sous l'action des forces gravifiques, il y a la composante d'écoulement qui est dirigée vers le bas.
Sous l'action des forces de succions, s'exerçant dans toutes les directions, il y a tendance à une homogénéisation de la répartition de l'eau dans tout l'espace poral.
Les eaux retenues entre les particules légères avancent vers le bas au fur et à mesure de la livraison de nouvelles quantités d'eaux par la couche supérieure.
La progression vers le bas s'effectue par remobilisation des eaux piégées par les effets de succions et par effet piston lorsque la composante gravifique (poids) de l'eau dépasse les forces de succions liant l'eau aux particules légères constituant la matrice du milieu poreux.

Donc, les eaux avancent par glissement sur la surface des particules en présence d'une quantité suffisante d'air située dans les pores, cet air étant renouvelable par échange diffusif et/ou convectif par la zone perméable (10b) de la paroi de l'enceinte et/ou par la structure d'aération.

Vu cette configuration, ces eaux n'ont pas l'occasion de s'échapper par cette zone perméable vers l'extérieur.

Arrivant au fond de l'enceinte, les eaux s'accumulent jusqu'à ce que leur poids ait un effet plus important que la force d'attraction entre elles et les particules légères. Les eaux traitées sortent, donc par le fond perméable (9) au fur et à mesure de l'arrivée d'autres eaux.

Il est à noter que la non-étanchéité de la zone inférieure (10c) de la paroi latérale de l'enceinte a uniquement comme fonction la consolidation mécanique de l'enceinte.
Cette zone n'a pas de rôle en ce qui concerne l'efficacité épuratrice de l'installation, cette zone correspond à la partie (17) de la courbe de la figure (5).

La couche supérieure (11) a un rôle de diffuseur assurant l'arrivée des eaux en traitement à la couche inférieure (12) suivant un système triphasique, solide-liquide-gaz.

Cette couche supérieure (11) a également comme rôle la stabilisation en position, lors du passage des eaux en traitement, les particules de la couche inférieure (12).
Cette stabilisation est nécessaire pour le fonctionnement de l'enceinte, ceci vu la différence en densité entre les eaux en traitement et les particules de cette couche inférieure.

Dans l'absence de cette stabilisation, les eaux en traitement créent des chemins préférentiels en repoussant les dites particules légères, ceci peut diminuer considérablement l'efficacité épuratrice de l'installation.

La couche supérieure de sable assure également une compensation éventuelle de la poussée hydraulique résultant d'un état proche de la saturation sur la partie supérieure de la couche inférieure.

Les résultats de nos expériences montrent qu'une contre-poussée convenable est assurée à partir d'une dizaine de cm d'épaisseur de sable pour une surface d'infiltration de 3 m².

Si on sait que les particules constituant le massif filtrant sont couvertes, après une période suffisante de fonctionnement par un biofilm actif, on peut comprendre que le passage des eaux dans la couche inférieure par glissement sur ces particules ne peut que amplifier l'efficacité épuratrice de l'installation.

Les eaux traitées issues de l'installation sont presque exemptes de sels d'amoniaque ; ces sels et également les sels de nitrite sont transformés par oxydation en sel de nitrate.

Ceci contribue à diminuer la teneur en demande chimique d'oxygène (DCO) qui atteint une valeur de 30 mg/l après deux mois de fonctionnement.
La teneur en matière en suspension est de l'ordre de 5 mg/l. La teneur en coliformes thermotolérants (témoin de la contamination fécale) atteint une valeur inférieure à 100 par 100 ml, cette valeur remplit parfaitement la condition restrictive des eaux de baignade.

Les particules de la couche inférieure légères (12) sont séparées de la zone perméable (10b) de la paroi de l'enceinte par une épaisseur (21) perméable à texture fine, ceci empêche ces particules de s'enfuir.

Le fond (9) de la l'enceinte est séparé de la couche inférieure par une épaisseur (20) perméable à texture fine, ceci pour empêcher également la fuite de particules.
Les deux couches (11) et (12) du massif filtrant sont séparées l'une de l'autre par une épaisseur (22) perméable à texture fine, ceci sert à empêcher l'interdiffusion de particules constituant ces deux couches.

La surface la couche supérieure (11) est couverte par une épaisseur amovible (23) perméable à texture fine.
Cette épaisseur (23) sert à stabiliser la dite surface vis-à-vis de l'arrivée d'eau, à harmoniser la répartition de l'eau sur elle et également à retenir une partie de la matière en suspension (MES).
Cette épaisseur (23) amovible peut être périodiquement changée ou nettoyée, évitant ainsi d'éventuels colmatages.
Ces épaisseurs perméables à texture fine sont des géotextiles (feutres).

Sur la figure (2) est présentée une autre forme de réalisation d'une installation (1A) semblable à celle de la figure (1) sauf que l'enceinte (24) a une forme de couronne constituée de deux parois latérales cylindriques et coaxiales (25) et (26) et un fond annulaire (27).

Ces deux parois latérales sont constituées chacune de trois zones :
- une zone supérieure étanche,
- une zone intermédiaire perméable et,
- une zone inférieure étanche.

Le fonctionnement de cette installation est identique à celui de la figure (1).

Il est à noter que l'enceinte peut avoir différentes formes, que le contenant peut également prendre des différentes formes, ceci pour différentes raisons soit de fabrication soit d'intégration dans le site sans pour autant changer le mode de fonctionnement. Ainsi, l'enceinte peut prendre la forme d'une colonne de section droite circulaire ou polygonale (carrée, rectangulaire ou autres).

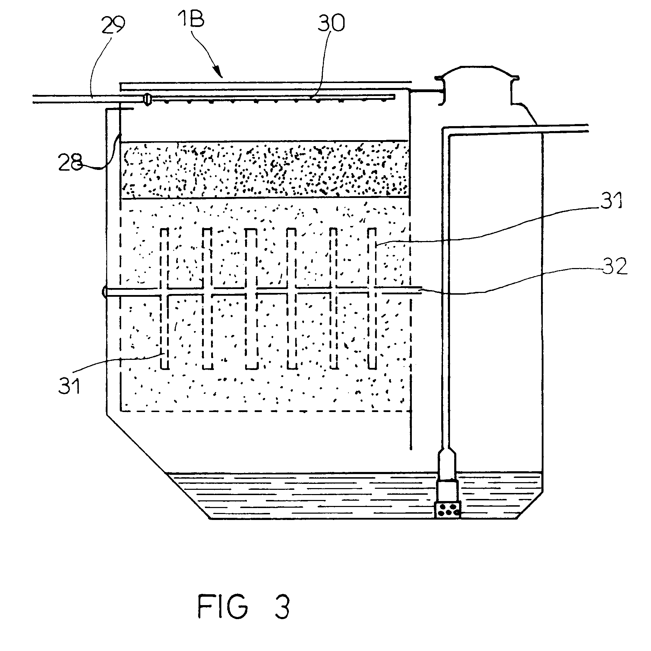

Une enceinte (28) présentant une section droite horizontale épousant le contour d'un carré ou d'un rectangle équipe l'installation (1B) représentée en figure 3.

On remarque que cette troisième forme de réalisation d'une installation selon l'invention est équipée d'un moyen distributeur des eaux prétraitées constitué par une conduite d'alimentation (29) prolongée, dans le contenant (3), par au moins une rampe d'aspersion (30) s'étendant horizontalement dans l'enceinte (28) au dessus du massif filtrant et en écartement de ce dernier.

Cette rampe est constituée par un élément tubulaire dans la paroi duquel sont implantées des buses d'aspersion disposées sur l'élément tubulaire de telle sorte à assurer une répartition uniforme de l'eau sur la surface supérieure du massif filtrant.

Il faut noter que les buses d'aspersion ont pour but de diviser l'eau en fines gouttelettes qui au cours de leur trajet des buses d'aspersion vers le massif filtrant s'oxygènent au contact de l'air.

Dans l'exemple de la figure 3, la rampe d'aspersion (30) est rectiligne.
Une telle rampe équipera de préférence une installation dont l'enceinte est de forme parallélépipédique.

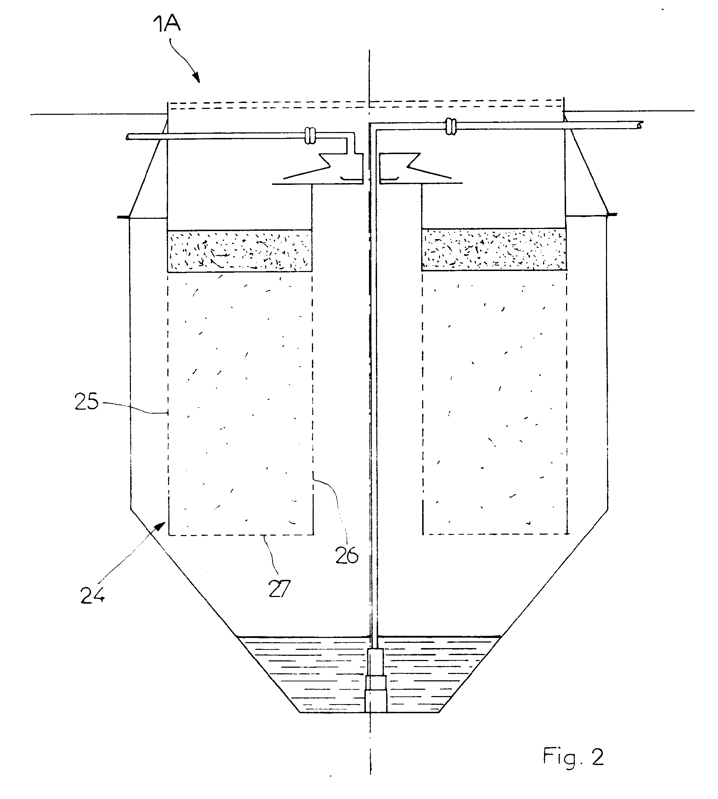

Pour une enceinte de forme cylindrique comme celle représentée en figure 1 ou bien pour une enceinte de forme en couronne comme représentée en figure 2, la rampe d'aspersion pourra se développer suivant le contour d'un cercle.

Selon cette forme de réalisation, la rampe d'aspersion s'étendra suivant un plan horizontal au dessus et en écartement du massif filtrant tout en étant centrée par rapport à l'enceinte.

Il est parfois souhaitable que la partie supérieure du massif filtrant soit totalement libérée et ne soit plus traversée par la structure d'aération comme c'est le cas pour l'installation objet de la figure 1.

A cet effet, l'enceinte d'une installation conforme à l'invention sera équipée d'une structure d'aération totalement logée dans la partie (12) du massif filtrant et constituée par une pluralité d'éléments diffuseurs judicieusement répartis dans la masse de la partie (12).

Chaque élément diffuseur (31) présente une chambre interne en communication avec la masse du massif filtrant par une pluralité d'orifices pratiqués dans les parois du dit élément.

En outre, cette chambre par d'autres orifices est en communication avec l'atmosphère externe de l'enceinte.

Selon une forme préférée de réalisation, chaque élément diffuseur se présente sous la forme d'une lame creuse parallélépipédique et est disposé verticalement dans la masse du massif filtrant. Les éléments diffuseurs (31) sont montés sur une conduite (32) commune s'étendant horizontalement dans l'enceinte et dans la masse de la partie 12 et débouchant par ses extrémités à l'extérieur de la dite enceinte.
Au moins une des extrémités de cette conduite est ouverte.

De plus, la chambre interne de chaque élément diffuseur est en relation avec le volume interne de la conduite (32) par l'intermédiaire d'au moins un orifice pratiqué dans l'épaisseur de la paroi de la dite conduite.

Selon une autre forme de réalisation, chaque élément diffuseur traverse de part en part l'enceinte par passage au travers d'ouvertures pratiquées dans la ou les paroi(s) verticale(s) de cette dernière et extérieurement à la dite enceinte est pourvu d'au moins un orifice de communication de sa chambre interne avec l'atmosphère.

Cette forme de réalisation permettant par rapport à la précédente, la suppression de la conduite horizontale, on en saisit immédiatement tout l'intérêt.

## Revendications

1. Installation de traitement aérobie complémentaire des eaux domestiques usées prétraitées et clarifiées afin de :
- diminuer sensiblement son contenu en matières en suspension (MES),
- diminuer sa valeur de demande chimique en oxygène (DCO) et,
- diminuer sensiblement sa teneur en germes témoins de contamination fécale, installation du type de celles comportant :
a) une enceinte (2) contenant un massif filtrant de particules non dégradables biologiquement stables chimiquement et non-altérables physiquement, les eaux à traiter traversant par gravité le dit massif filtrant, l'enceinte (2) étant constituée par des parois latérales et par un fond perméable (9) par lequel les eaux traitées sont récupérées,
b) un moyen distributeur assurant l'arrivée des eaux à traiter à la dite enceinte (2),
suivant l'invention, l'installation se caractérise essentiellement en ce que :
- le massif filtrant est composé des deux couches :
a) une couche inférieure légère (12) dont les particules ont une même nature et une granulométrie de 0,05 à 5 mm, une densité inférieure à 100 kg/m³, cette couche ayant un vide interstitiel représentant jusqu'à 85 % de son volume,
b) une couche supérieure dense (11) dont les particules ont une même nature et une granulométrie de 0,05 à 5 mm, une densité supérieure à 1000 kg/m³, cette couche ayant un vide interstitiel représentant jusqu'à 35 % de son volume,
- le moyen distributeur contrôle le débit d'arrivée des eaux prétraitées de telle sorte que ces eaux, traversant par gravité, dans l'ordre, la couche supérieure (11) puis la couche inférieure (12) effectuent au moins la fin du passage dans la couche supérieure dans un milieu non saturé, c'est-à-dire, dans un milieu triphasique solide-liquide-gaz, et en ce que :
- des moyens d'aération (14), (31) fournissent latéralement l'air dans la couche légère inférieure (12).

2. Installation selon la revendication 1 caractérisée en ce que les moyens d'aération fournissant latéralement l'air dans la couche légère inférieure sont constitués par :
- des parois latérales de l'enceinte (2), (24), (28) perméables et/ou,
- au moins une structure d'aération (14), (31) s'étendant dans le massif filtrant et dont les parois sont perméables vis-à-vis de la dite couche inférieure, l'intérieur de cette ou (ces) structure(s) communique soit avec l'atmosphère soit avec une source d'air forcé.

3. Installation selon la revendication 2 caractérisée en ce que les parois latérales de l'enceinte (2), (24), (28) ont une zone supérieure (10a) étanche vis-à-vis de laquelle se trouve au moins partiellement la couche supérieure dense (11) et une zone perméable (10b) située au dessous de la dite zone supérieure vis-à-vis de laquelle se trouve au moins partiellement la couche inférieure légère (12) du massif filtrant.

4. Installation selon la revendication 2 caractérisée en ce que les parois latérales de l'enceinte (2), (24), (28) sont constituées de trois zones :
- une zone supérieure (10a) étanche vis-à-vis de laquelle se trouve, au moins partiellement la couche supérieure dense, (11),
- une zone intermédiaire (10b) perméable vis-à-vis de laquelle se trouve partiellement la couche inférieure légère (12) permettant ainsi la communication de l'air à la dite couche,
- une zone inférieure étanche (10c).

5. Installation selon l'une quelconque des revendications 1 à 4 caractérisée en ce que la matière des particules de la couche inférieure légère (12) est une matière à dominante siliceuse.

6. Installation selon la revendication 5 caractérisée en ce que la matière à dominante siliceuse est la perlite expansée.

7. Installation selon l'une quelconque des revendications 1 à 4 caractérisée en ce que les particules de la couche dense supérieure (11) sont des grains de sable.

8. Installation selon la revendication 1 caractérisée en ce que le moyen distributeur assure l'arrivée des eaux à traiter soit d'une fa on continue soit d'une façon intermittente selon des lames d'eau séquentiellement envoyées.

9. Installation selon la revendication 8 dans laquelle le moyen distributeur envoie séquentiellement des lames d'eau sur la surface de la couche supérieure dense caractérisée en ce que chaque lame d'eau envoyée à une valeur inférieure à la hauteur équivalente de l'espace poral de la dite couche dense supérieure.

10. Installation selon la revendication 2 caractérisée en ce que :
- le massif filtrant est séparé des parties perméables des parois latérales, du fond (9) de l'enceinte (2), (24), (28) par des épaisseurs perméables à texture fine (20), (21), ceci pour empecher la fuite de particules,
- les deux couches (11) et (12) constituant le massif filtrant sont séparées l'une de l'autre par une épaisseur perméable à texture fine (22), ceci pour empecher l'interdiffusion de particules constituant les deux couches,
- la surface de la couche supérieure (11) est couverte d'une épaisseur amovible (23) à texture fine, ceci pour stabiliser la dite surface vis-à-vis de l'eau, pour harmoniser la répartition de l'eau sur elle et également pour retenir une partie de la matière en suspension (MES).

11. Installation selon la revendication 10 caractérisée en ce que les dites épaisseurs à texture fine (20), (21), (22), (23) sont des géotextiles (feutres).

12. Installation selon la revendication 1 caractérisée en ce que le moyen d'aération ou structure d'aération est constitué par une pluralité d'éléments diffuseurs (31) répartis dans la masse de la partie (12) du massif filtrant, chaque élément diffuseur se présentant sous la forme d'une lame creuse parallélépipédique, la chambre interne de la dite lame étant en communication avec la masse du massif filtrant par une pluralité d'orifices pratiqués dans les parois de la dite lame et les dits éléments diffuseurs (31) étant montés sur une conduite (32) laquelle s'étend horizontalement dans l'enceinte et dans la partie (12) du massif filtrant, la dite conduite (32) débouchant par ses extrémités à l'extérieur de la dite enceinte, au moins une des extrémités de la dite conduite (32) étant ouverte et la chambre interne de chaque élément diffuseur étant en relation avec le volume interne de la conduite (32) par l'intermédiaire d'au moins un orifice pratiqué dans l'épaisseur de la paroi de la dite conduite (32).

13. Installation selon la revendication 1 caractérisée en ce que le moyen d'aération (14) est constitué par une pluralité d'éléments diffuseurs (31) pourvus chacun d'une chambre interne, que leur chambre interne est en communication avec la partie (12) du massif filtrant par des orifices pratiqués dans ses parois et que chaque élément diffuseur (31) traverse de part en part l'enceinte par passage au travers d'ouvertures pratiquées dans la ou les parois verticales de la dite enceinte et que chaque élément (31) extérieurement à la dite enceinte est pourvu d'au moins un orifice de communication de sa chambre interne avec l'atmosphère.

## Patentansprüche

1. Anlage zur aeroben Nachbehandlung von vorbehandelten und geklärten Haushalts-Abwässern zur
- wesentlichen Verminderung ihres Gehalts an suspendierten Stoffen (sS),
- Verminderung ihres chemischen Sauerstoffbedarfs (CSB) und
- wesentlichen Verringerung ihres Gehalts an fäkale Verunreinigung anzeigende Bakterien, welche folgenden Elemente aufweist:
a) einen Raum (2), der eine Filtermasse aus biologisch nicht abbaubaren, chemisch beständigen und physikalisch nicht veränderbaren Teilchen enthält, wobei die zu behandelnden Abwässer unter der Wirkung der Schwerkraft durch die Filtermasse hindurchtreten und der Raum (2) aus zwei parallelen Wänden und einem durchlässigen Boden (9) besteht, durch welchen die behandelten Abwässer zurückgewonnen werden;
b) eine Verteilvorrichtung, welche die Einleitung der zu behandelnden Abwässer in den Raum (2) besorgt,
**dadurch gekennzeichnet,** daß
- die Filtermasse aus zwei Schichten besteht:
a) einer unteren leichten Schicht (12), deren Teilchen von gleicher Art sind und eine Korngröße von 0,05 bis 5 mm haben, wobei die Dichte der Schicht unter 100 kg/m³ liegt und ihr Porenvolumen (interstitielles Volumen) bis 85 % ihres Volumens beträgt;
b) einer oberen dichten Schicht (11), deren Teilchen von gleicher Art sind und eine Korngröße von 0,05 bis 5 mm haben, wobei diese Schicht eine Dichte über 1000 kg /m³ hat und ihr Porenvolumen (interstitielles Volumen) bis 35 % ihres Volumens beträgt,
- die Verteilvorrichtung den Zulauf an vorbehandeltem Abwasser so regelt, daß dieses durch Schwerkraft der Reihe nach die obere Schicht (11) und dann die untere Schicht (12) durchläuft, wobei es sich mindestens am Ende des Durchlaufs in der oberen Schicht in einem ungesättigten Milieu, das heißt in einem 3-Phasen-Milieu fest-flüssig-gasförmig befindet, und daß
- Lüftungsvorrichtungen (14), (31) seitlich Luft in die leichte untere Schicht (12) liefern.

2. Anlage nach Anspruch 1, **dadurch gekennzeichnet,** daß die Vorrichtungen, welche seitlich Luft in die leichte untere Schicht liefern, aus
- durchlässigen Seitenwänden (24), (28) des Raumes (2) und/oder
- mindestens einem Belüftungselement (14), (31) bestehen, das sich in der Filtermasse erstreckt und dessen Wände gegenüber der unteren Schicht durchlässig sind, wobei das Innere dieses Elements oder dieser Elemente entweder mit der Atmosphäre oder mit einer Druckluftquelle in Verbindung steht.

3. Anlage nach Anspruch 2, **dadurch gekennzeichnet,** daß die Seitenwände (24), (28) des Raumes (2) eine dichte obere Zone (10a) aufweisen, der gegenüber sich mindestens teilweise die dichte obere Schicht (11) befindet, und eine unterhalb der oberen Zone angeordnete durchlässige Zone (10b) aufweisen, der gegenüber sich mindestens teilweise die untere leichte Schicht (12) der Filtermasse befindet.

4. Anlage nach Anspruch 2, **dadurch** **gekennzeichnet,** daß die Seitenwände (24), (28) des Raumes (2) aus drei Zonen bestehen:
- eine obere dichte Zone (10a), der gegenüber sich mindestens teilweise die obere dichte Schicht (11) befindet,
- eine durchlässige Zwischenzone (10b), der gegenüber sich teilweise die untere leichte Schicht (12) befindet, und die den Zutritt von Luft in diese Schicht ermöglicht,
- eine untere dichte Zone (10c).

5. Anlage nach einem der Ansprüche 1 bis 4, **dadurch gekenn****zeichnet**, daß das Material der Teilchen der unteren leichten Schicht (12) ein hauptsächlich silikatartiges Material ist.

6. Anlage nach Anspruch 5, **dadurch gekennzeichnet, daß** das hauptsächlich silikatartige Material expandierter Perlit ist.

7. Anlage nach einem der Anspruche 1 bis 4, **dadurch gekenn****zeichnet,** daß die Teilchen der dichten oberen Schicht (11) Sandkörner sind.

8. Anlage nach Anspruch 1, **dadurch gekennzeichnet,** daß die Verteilvorrichtung den Zulauf des zu behandelnden Abwassers entweder kontinuierlich oder intermittierend gemäß den nacheinander zugeführten Abwasserteilströmen verteilt.

9. Anlage nach Anspruch 8, worin die Verteilvorrichtung nacheinander Wasserteilströme über die Oberfläche der oberen Schicht abgibt, **dadurch gekennzeichnet,** daß jeder zugeführte Abwasserteilstrom eine geringere Größe als die äquivalente Höhe des Porenvolumens der oberen dichten Schicht hat.

10. Anlage nach Anspruch 2, **dadurch gekennzeichnet,** daß
- die Filtermasse von den durchlässigen Teilen der Seitenwände (24), (28) und des Bodens (9) des Raumes (2) durch durchlässige Schichten (20), (21) getrennt ist, um den Austritt von Teilchen zu verhindern,
- die zwei Schichten (11) und (12), welche die Filtermasse bilden, voneinander durch eine durchlässige Schicht (22) mit feiner Struktur getrennt sind, um die Diffusion von Teilchen von der einen in die andere der beiden Schichten zu verhindern,
- die Oberfläche der oberen Schicht (11) mit einer abnehmbaren Schicht (23) mit feiner Struktur bedeckt ist, um diese Oberfläche gegenüber dem Abwasser zu stabilisieren, die Verteilung des Abwassers gleichmäßig zu gestalten und auch einen Teil der suspendierten Materie zurückzuhalten.

11. Anlage nach Anspruch 10, **dadurch gekennzeichnet,** daß die Schichten mit feiner Struktur (20), (21), (22), (23) Geotextilien (Filze) sind.

12. Anlage nach Anspruch 1, **dadurch gekennzeichnet,** daß die Belüftungsvorrichtung oder das Belüftungselement aus einer Mehrzahl von Diffusorelementen (31) besteht, die in der Masse des Teils (12) der Filtermasse verteilt sind, wobei jedes Diffusorelement die Form eines quaderförmigen hohlen Blattkörpers hat, dessen Innenkammer mit der Masse der Filtermasse durch eine Mehrzahl von in den Winden des Blattkörpers ausgebildeten Öffnungen in Verbindung steht, wobei die Diffusorelemente (31) an einer Leitung (32) montiert sind, die sich horizontal in dem Raum und im Teil (12) der Filtermasse erstreckt und mit ihren Enden außerhalb des Raumes mündet, wobei mindestens eines der Enden der Leitung (32) offen ist und die Innenkammer jedes Diffusorelements mit dem Innenraum der Leitung (32) mittels mindestens einer die Dicke der Wand der Leitung (32) durchsetzenden Öffnung in Verbindung steht,

13. Anlage nach Anspruch 1, **dadurch gekennzeichnet,** daß die Belüftungsvorrichtung (14) aus einer Mehrzahl von Diffusorelementen (31) besteht, die jedes mit einer Innenkammer versehen sind, wobei ihre Innenkammern mit dem Teil (12) der Filtermasse durch in ihren Wänden ausgebildete Öffnungen in Verbindung stehen und jedes Diffusorelement (31) den Raum von der einen zur anderen Seite durch Öffnungen durchquert, die in der senkrechten Wand oder den senkrechten Wänden des Raumes ausgebildet sind, wobei jedes Element (31) außerhalb des Raumes mit mindestens einer Öffnung zur Verbindung seiner Innenkammer mit der Atmosphäre versehen ist.

## Claims

1. Complementary aerobic treatment installation for pretreated and clarified domestic waste waters in order to:
- reduce appreciably their content of material in suspension (MES),
- reduce their chemical oxygen demand value (DCO) and,
- reduce appreciably their percentage of germs which are evidence of fecal contamination, installation of the type comprising:
(a) an enclosure (2) containing a solid filtering mass of non-biodegradable, chemically stable and physically unchageable particles, the waters to be treated passing through said solid filtering mass by gravity, the enclosure (2) being constituted by lateral walls and by a permeable base (9) through which the treated waters are recovered,
(b) a distributor means ensuring the delivery of the waters to be treated at said enclosure (2),
in accordance with the invention, the plant is essentially characterised in that:
- the solid filtering mass is composed of two beds:
(a) a lower light bed (12), the particles of which have the same nature and a particle-size distribution of 0.05 to 5mm, a density lower than 100 kg/m³, this layer having an interstitial cavity representing up to 85% of its volume,
(b) an upper dense bed (11), the particles of which have the same nature and a particle-size distribution of 0.05 to 5mm, a density higher than 1000 kg/m³, this bed having an interstitial cavity representing up to 35% of its volume,
- the distributor means controls the delivery flow of the pretreated waters in such manner that the waters, passing by gravity through, in order, the upper bed (11) then the lower bed (12) achieve at least the end of the passage in the upper bed in an unsaturated medium, that is, in a three-phase solid-liquid-gas medium, and in that:
- aeration means (14), (31) laterally supply air into the light lower layer (12).

2. Installation according to claim 1 characterised in that the aeration means laterally supplying the air into the light lower bed are constituted by:
- the permeable lateral walls of the enclosure (2), (24), (28) and/or,
at least one aeration structure (14), (31) extending into the solid filtering mass and of which the walls are permeable towards said lower bed, the interior of this or (these) structure(s) communicates either with the atmosphere or with a source of forced air.

3. Installation according to claim 2 characterised in that the lateral walls of the enclosure (2), (24), (28) have an upper impervious zone (10a) facing which the upper dense bed (11) is at least partially located and a permeable zone (10b) situated below said upper zone facing which the lower light bed (12) of the said filtering mass is at least partially located.

4. Installation according to claim 2 characterised in that the lateral walls of the enclosure (2), (24), (28) are constituted by three zones:
- an upper impervious zone (10a) facing which the upper dense bed (11), is at least partially located,
- an intermediate permeable zone (19b) facing which the lower light bed (12) is partially located, thus permitting the communication of the air to said bed,
- a lower impervious zone (10c) .

5. Installation according to any of claims 1 to 4 characterised in that the material of the particles of the lower light bed (12) is a predominantly siliceous material.

6. Installation according to claim 5 characterised in that the predominantly siliceous material is expanded perlite.

7. Installation according to any of claim 1 to 4 characterised in that the particles of the dense upper bed (11) are grains of sand.

8. Installation according to claim 1 characterised in that the distributor means ensures the delivery of the waters to be treated either continuously or intermittently according to the sheets of water sent sequentially.

9. Installation according to claim 8 in which the distributor means sequentially sends sheets of water on to the surface of the dense upper bed characterised in that each sheet of water sent has a value below the equivalent head of the poral space of said dense upper bed.

10. Installation according to claim 2 characterised in that:
- the solid filtering mass is separated from the permeable parts of the lateral walls, from the base (9) of the enclosure (2), (24), (28) by permeable layers of fine texture (20), (21), the latter for preventing the leak of particles,
- the two beds (11) and (12) constituting the solid filtering mass are separated from each other by a permeable layer of fine texture (22), the latter for preventing the inter-diffusion of particles constituting the two layers,
- the surface of the upper bed (11) is covered by a removable layer (23) of fine texture, this latter for stabilising said surface with respect to the water, for harmonising the distribution of the water thereon and equally for retaining a part of the material in suspension (MES).

11. Installation according to claim 10 characterised in that said layers of fine texture (20), (21), (22), (23) are geotextiles (felts)

12. Installation according to claim 1 characterised in that the aeration means or aeration structure is constituted by a plurality of diffusion elements (31) distributed in the mass of the part (12) of the solid filtering mass, each diffusion element appearing in the form of a hollow parallelepipedic strip, the internal chamber of said strip being in communication with the mass of the solid filtering mass via a plurality of openings made in the walls of said strip and said diffusion elements (31) being mounted on a pipe (32) which extends horizontally in the enclosure and in the part (12) of the solid filtering mass, said pipe (32) emerging at its ends to the exterior of said enclosure, at least one of the ends of said pipe (32) being open and the internal chamber of said diffusion element being in connection to the internal volume of the pipe (32) through the intermediary of at least one opening made in the layer of the wall of said pipe.

13. Installation according to claim 1 characterised in that the aeration means (14) is constituted by a plurality of diffusion elements (31) each provided with an internal chamber, that their internal chamber is in communication with the part (12) of the solid filtering mass through openings made in its walls and that each diffusion element (31) crosses right through the enclosure by passing through openings made in the vertical wall or walls of said enclosure and that each element (31) outside said enclosure is provided with at least one opening for communication of its internal chamber with the atmosphere.
